# EUROPEAN PATENT SPECIFICATION

(11) **EP 4 033 109 B1**
(45) Date of publication and mention of the grant of the patent: **10.04.2024**
(21) Application number: 21382058.2
(22) Date of filing: 25.01.2021
(51) Int. Cl.: F16B 7/04, F16C 3/02, F16D 1/02, F16D 1/08, F16D 1/108, F16D 1/10

(54) **TUBULAR SHAFT SPLICING DEVICE CAPABLE OF TRANSMITTING TORQUE**
ROHRWELLENSPLEISSVORRICHTUNG MIT FÄHIGKEIT ZUR DREHMOMENTÜBERTRAGUNG
DISPOSITIF D'ÉPISSAGE DE TIGE TUBULAIRE CAPABLE DE TRANSMISSION DE COUPLE

(43) Date of publication of application: 27.07.2022
(73) Proprietor: Soltec Innovations, S.L., 30500 Molina de Segura (ES)
(72) Inventor: DE LA FUENTE DE PABLO, Ayim Manuel, 40196 La Lastrilla (ES); MALDONADO NICOLÁS, Juan José, 30167 La Raya (ES); CORDERO ÁLVAREZ, Miguel, 10001 Cáceres (ES)
(74) Representative: Isern Patentes y Marcas S.L.

(56) References cited:
- WO-A1-2007/068897
- DE-U1-202017 106 464
- FR-A- 1 394 313

## Description

### Technical field

The present invention concerns in general to a tubular shaft splicing device capable of transmitting torque, and more in particular to a tubular shaft splicing device useful for mechanically connecting two stretches of a tubular shaft subjected to torsional stresses, such as for example a rotational tubular shaft to which structures supporting photovoltaic panels are attached in a solar tracker.

### Prior art

It is known in the art the use of long tubular shafts which are subjected to torsional stresses and which are made of two or more tubular shaft stretches mechanically connected to one another at their ends by means of tubular shaft splicing devices capable of transmitting torque. In the field of solar trackers, for example, these long tubular shafts are used to bear, secured thereto, structures supporting photovoltaic panels, and are motor-driven to follow the relative movements of the sun. Wind impinging on the photovoltaic panels and the torque imparted by the driving motor are factors that cause torsional stresses to the tubular shaft.

One known type of tubular shaft splicing device comprises two opposite splicing plates superimposed to opposite sides of adjacent end portions of two contiguous tubular shaft stretches, with the splicing plates being joined together and pressed against the end portions of the tubular shaft stretches by screws installed through aligned holes formed in facing end flanges of the respective splicing plates. Therefore, there are no holes in the end portions of the spliced tubular shaft stretches. This type of tubular shaft splicing device is suitable for splicing tubular shaft stretches having a square cross-section although in this case, due to the torsional stresses, deformation of the splicing plates may occur leading to a certain degree of play or relative rotation. However, this type of tubular shaft splicing device is less suitable for splicing tubular shaft stretches having a round or near to round cross-section since in this case, as they are not limited by the geometry, there would be a risk of relative rotation between the parts.

Another known type of tubular shaft splicing device comprises adjacent end portions of two contiguous tubular shaft stretches which have different diameters and are inserted into each other, and rivets installed in aligned holes formed in the overlapped end portions of the spliced tubular shaft stretches. One drawback with this type of tubular shaft splicing device is need of providing contiguous tubular shaft stretches having different diameters or having adjacent end portions of different diameters.

Still another known type of tubular shaft splicing device comprises two opposite splicing plates overlapped to adjacent end portions of two contiguous tubular shaft stretches and connected together by screws installed through aligned holes formed in facing end flanges of the respective splicing plates at two first opposite sides of the tubular shaft, in combination with cylindrical passing-through bolts installed in aligned circular holes formed in both the two opposite splicing plates and the two adjacent end portions of the spliced tubular shaft stretches at two second opposite sides of the tubular shaft angularly shifted at 90 degrees from the first opposite sides.

The use of cylindrical bolts or rivets having inserted in circular holes formed in the end portions of the tubular shaft stretches and/or in the splicing plates makes the contact between the bolts or rivets and the tubular shaft and/or the splicing plates to be limited to specific points of the circular holes contour depending on the direction of the loads, and this causes concentration of loads in small regions of the circular holes contour that may produce local deformations in the shaft holes. Therefore, a large number of bolts or rivets are required in order to avoid this negative effect.

Documents WO2007/068897A1 and FR1394313 disclose tubular shaft splicing devices capable of transmitting torque, according to the preamble of independent claim 1 below.

There is a need for a tubular shaft splicing device which is capable of transmitting high torques without the drawbacks of the known splicing devices.

### Disclosure of the invention

The present invention provides a tubular shaft splicing device capable of transmitting torque comprising adjacent first and second end portions of contiguous first and second tubular shaft stretches of a tubular shaft having a longitudinal axis, one or more splicing plates superimposed to the adjacent first and second end portions of the first and second tubular shaft stretches, and passing-through locking members inserted in aligned locking holes formed in the first and second end portions of the first and second tubular shaft stretches and in the superimposed one or more splicing plates, with the passing-through locking members protruding from outer surfaces of the splicing plate.

According to the invention, the passing-through locking members have a rectangular or trapezium cross-section and the locking holes formed in the first and second end portions of the first and second tubular shaft stretches and in the one or more splicing plates have a conjugated rectangular or trapezium shape, wherein two sides of the rectangular or trapezium shape are parallel to the longitudinal axis. Optionally, the rectangular or trapezium cross-section or shape can have rounded corners without departing from the scope of the present invention.

By using passing-through locking members having a rectangular or trapezium cross-section in cooperation with locking holes having a conjugated rectangular or trapezium shape the contact surface between the passing-through locking members and the edges of the locking holes is increased in comparison with the cylindrical passing-through locking members (screws, bolts or rivets) and circular locking holes of the prior art, thereby the concentration of surface stress on the tubular shaft stretches and on the one or more splicing plates is reduced and the risk of local deformation thereof is mitigated.

According to the invention, the locking holes comprise pairs of shaft locking holes and pairs of plate locking holes. The pairs of shaft locking holes are formed in opposite wall sections of each one of the first and second end portions of the first and second tubular shaft stretches. The pairs of plate locking holes formed in opposite wall sections of the at least one splicing plate. The pairs of plate locking holes are in alignment with the pairs of shaft locking holes and the pairs of shaft locking holes and the corresponding pairs of plate locking holes are centred in respective planes perpendicular to the longitudinal axis.

Accordingly, the passing-through locking members comprise pairs of passing-through locking members inserted in the pairs of shaft locking holes and pairs of plate locking holes. The pairs of passing-through locking members have protruding end portions protruding from opposite outer surfaces of the one or more splicing plates, and first connection holes perpendicular to the longitudinal axis are formed in the protruding end portions of the pairs of passing-through locking members. Fastening screws are installed through the connection holes and tightened by fastening nuts.

With this configuration, the passing-through locking members of each pair are pressed one against the other and against the corresponding locking holes thereby gaps between the holes and the passing-through locking members inherent to the hole machining process are eliminated and torque transmission without any play between the spliced tubular shaft stretches is ensured.

Preferably, each one of the pairs of passing-through locking members has a first member and a second member, and the first member of each pair of passing-through locking members and the second member of an adjacent pair of passing-through locking members are rigidly connected together at one of their protruding end portions by a transverse connecting member.

Thus, the first and second members of adjacent pairs of passing-through locking members together with the transverse connecting member connecting them to one another constitute a U-shaped locking element which improves the assembly operations since the total number of pieces is reduced, mounting tasks are facilitated to the operator, and times are shortened.

In one embodiment, the first and second end portions of the first and second tubular shaft stretches have a circular cross-section with an outer diameter, and the at least one splicing plate is a single splicing plate having a circular cross-section with an inner diameter conjugated to the outer diameter of the first and second end portions of the first and second tubular shaft stretches.

In another embodiment, the at least one splicing plate comprises opposite first and second splicing plates which are superimposed to opposite sides of the adjacent first and second end portions of the first and second tubular shaft stretches. In this embodiment, the first and second end portions of the first and second tubular shaft stretches have opposite parallel first and second flat wall sections and each one of the first and second splicing plates has respective opposite parallel first and second flat end sections overlapping the opposite parallel first and second flat wall sections of the first and second end portions of the first and second tubular shaft stretches. Therefore, the first and second splicing plates have a U-shaped cross-section.

Preferably, the locking holes are formed in the opposite parallel first and second flat wall sections of the first and second end portions of the first and second tubular shaft stretches and in the opposite parallel first and second flat end sections of the first and second splicing plates.

Also preferably, one of the opposite parallel first and second flat end sections of the first splicing plate is arranged between one of the first and second flat wall sections of the first and second end portions of the first and second tubular shaft stretches and one of the opposite parallel first and second flat end sections of the second splicing plate, and the other one of the opposite parallel first and second flat end sections of the second splicing plate is arranged between the other one of the first and second flat wall sections of the first and second end portions of the first and second tubular shaft stretches and the other one of the opposite parallel first and second flat end sections of the first splicing plate.

This arrangement allows for the first and second splicing plates to be identical, which further reduces the total number of pieces in the splicing device.

In these embodiments having flat wall sections, the first opposite flat wall sections of the first end portion of the first tubular shaft stretch are connected together by opposite first connecting wall sections and the second opposite flat wall sections of the second end portion of the second tubular shaft stretch are connected together by opposite second connecting wall sections.

The opposite parallel first and second flat end sections of the first splicing plate are connected together by a first connecting plate section which is arranged on one of the opposite first connecting wall sections of the first end portion of the first tubular shaft stretch and on one of the opposite second connecting wall sections of the second end portion of the second tubular shaft stretch. Similarly, the opposite parallel first and second flat end sections of the second splicing plate are connected together by a second connecting plate section which is arranged on the other one of the opposite first connecting wall sections of the first end portion of the first tubular shaft stretch and on the other one of the opposite second connecting wall sections of the second end portion of the second tubular shaft stretch.

Optionally, the opposite first connecting wall sections of the first end portion of the first tubular shaft stretch, the opposite second connecting wall sections of the second end portion of the second tubular shaft stretch, the first connecting plate section of the first splicing plate, and the second connecting plate section of the second splicing plate are convex vaulted although they could alternatively be flat or have another shape.

### Brief description of the drawings

The above features and advantages will be more apparent from the following detailed description of several embodiments, which are given by way of illustrative and non-limitative example, with reference to the accompanying drawings, in which:
- Fig. 1 is an exploded perspective view of a tubular shaft splicing device capable of transmitting torque in accordance with a first embodiment of the present invention;
- Fig. 2 is an enlarged perspective view of the tubular shaft splicing device of Fig. 1 in an assembled position;
- Fig. 3 is an exploded perspective view of a tubular shaft splicing device capable of transmitting torque in accordance with a second embodiment of the present invention;
- Fig. 4 is an enlarged perspective view of the tubular shaft splicing device of Fig. 3 in an assembled position;
- Fig. 5 is a top plan view of the tubular shaft splicing device of Figs. 3 and 4 in the assembled position;
- Fig. 6 is a cross-sectional view taken along the plane VI-VI of Fig. 5; and
- Fig. 7 is a cross-sectional view taken along the plane VII-VII of Fig. 6 .

### Detailed description of several embodiments

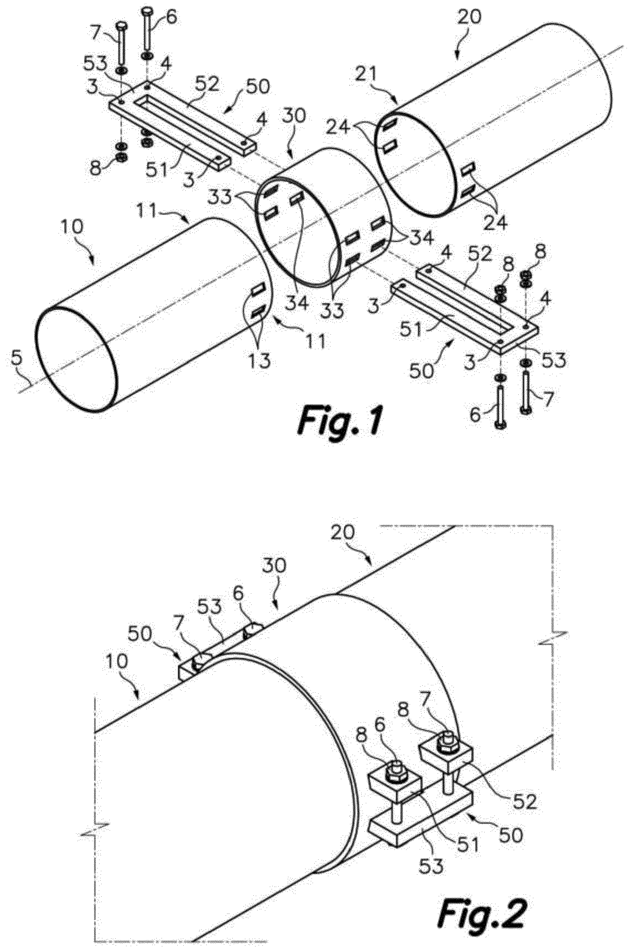

Referring first to Figs. 1 and 2, a tubular shaft splicing device according to a first embodiment of the present invention is shown. The tubular shaft splicing device is capable of transmitting torque and is useful for splicing contiguous first and second tubular shaft stretches 10, 20 of a tubular shaft having a longitudinal axis 5.

In this first embodiment, the tubular shaft splicing device comprises identical adjacent first and second end portions 11, 21 of the contiguous first and second tubular shaft stretches 10, 20, one single splicing plate 30, two identical U-shaped locking elements 50, and two first and two second fastening screws 6, 7 with corresponding fastening nuts 8. The first and second end portions 11, 21 of the first and second tubular shaft stretches 10, 20 have an identical circular cross-section, and the splicing plate 30 has a circular cross-section with an inner diameter conjugated to an outer diameter of the first and second end portions 11, 21 of the first and second tubular shaft stretches 10, 20. In an assembled position shown in Fig. 2 , the splicing plate 30 is superimposed to the adjacent first and second end portions 11, 21 of the first and second tubular shaft stretches 10, 20.

In opposite wall sections of the first end portion 11 of the first tubular shaft stretch 10 first pairs of shaft locking holes 13 are formed, and in opposite wall sections of the second end portion 21 of the second tubular shaft stretch 20 second pairs of shaft locking holes 24 are formed. The first pairs of shaft locking holes 13 of the first end portion 11 of the first tubular shaft stretch 10 are centred in a first plane perpendicular to the longitudinal axis 5 and the second pairs of shaft locking holes 14 of the second end portion 21 of the second tubular shaft stretch 20 are centred in a second plane perpendicular to the longitudinal axis 5.

Each one of the first and second pairs of shaft locking holes 13, 24 has a first hole and a second hole. The first holes of the first and second pairs of shaft locking holes 13, 24 are all centred in a third plane parallel to the longitudinal axis 5 and perpendicular to the first and second planes, and the second holes of the first and second pairs of shaft locking holes 13, 24 are all centred in a fourth plane parallel to the third plane.

In opposite wall sections of the splicing plate 30 first and second pairs of plate locking holes 33, 34 are formed. The first and second pairs of plate locking holes 33, 34 are arranged so that in the assembled position, as shown in Fig. 2 , the first pairs of plate locking holes 33 formed in the splicing plate 30 are in alignment with the first pairs of shaft locking holes 13 formed in the first end portion 11 of the first tubular shaft stretch 10 and the second pairs of plate locking holes 34 formed in the splicing plate 30 are in alignment with the second pairs of shaft locking holes 24 formed in the second end portion 21 of the second tubular shaft stretch 20.

The splicing device further comprises one pair of first passing-through locking members 51 and one pair of second passing-through locking members 52. In the assembled position, the pair of first passing-through locking members 51 are inserted in the first pairs of plate locking holes 33 and in the aligned first pairs of shaft locking holes 13, and the pair of second passing-through locking members 52 are inserted in the second pairs of plate locking holes 34 and in the aligned second pairs of shaft locking holes 24. Each first passing-through locking member 51 of the pair of first passing-through locking members 51 and the adjacent second passing-through locking member 52 of the pair of second passing-through locking members 52 are rigidly connected together by a transverse connecting member 53 constituting one of the two aforementioned U-shaped locking elements 50.

As shown in Fig. 2, in the assembled position the first and second passing-through locking members 51, 52 have protruding end portions protruding from an outer surface of the splicing plate 30. The transverse connecting member 53 is connected to the protruding end portions at one end of the first and second passing-through locking members 51, 52. In the protruding end portions of the first and second passing-through locking members 51, 52 connection holes 3, 4 perpendiculars to the longitudinal axis 5 are formed. The connection holes 3, 4 are arranged so that the connection holes 3, 4 of one of the locking elements 50 are aligned with the connection holes 3, 4 of the other locking element 50. Fastening screws 6, 7 are installed through the aligned connection holes 3, 4 and the fastening screws 6, 7 are tightened by fastening nuts 8.

The first and second passing-through locking members 51, 52 have a rectangular or trapezium cross-section and the shaft locking holes 13, 24 formed in the first and second end portions 11, 21 of the first and second tubular shaft stretches 10, 20 and the plate locking holes 33, 34 formed in in the splicing plate 30 have a conjugated rectangular or trapezium shape. Two sides of the rectangular or trapezium shape are parallel to the longitudinal axis 5.

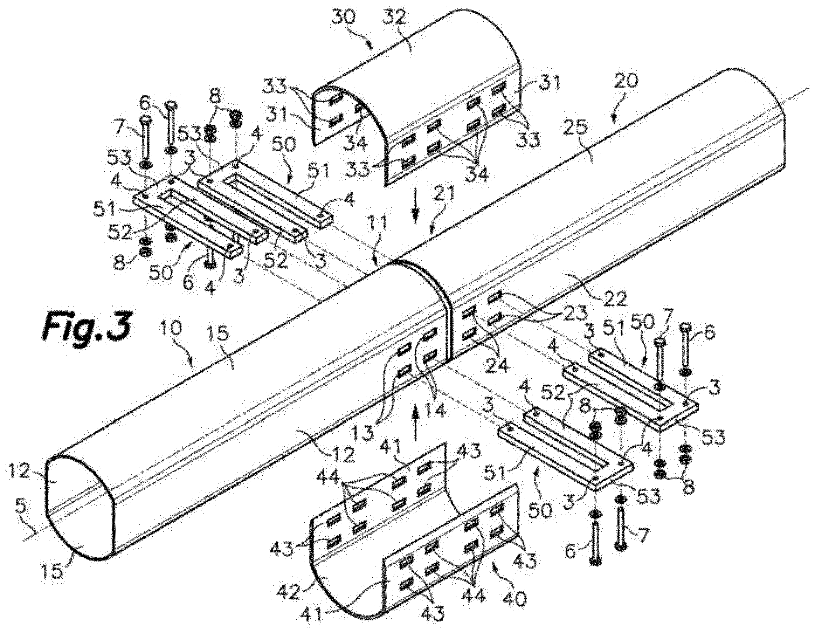

Referring now to Figs. 3 to 7 , there is shown a tubular shaft splicing device capable of transmitting torque according to a second embodiment of the present invention which comprises identical adjacent first and second end portions 11, 21 of contiguous first and second tubular shaft stretches 10, 20 of a tubular shaft having a longitudinal axis 5, opposite identical first and second splicing plates 30, 40, four identical locking elements 50, and four first and four second fastening screws 6, 7 with corresponding fastening nuts 8.

The first end portion 11 of the first tubular shaft stretch 10 has two opposite parallel first flat wall sections 12 connected together by opposite first connecting wall sections 15, and the second end portion 21 of the second tubular shaft stretch 20 has two opposite parallel second flat wall sections 22 connected together by opposite second connecting wall sections 25. The opposite first and second connecting wall sections 15, 25 are, in the shown embodiment, convex vaulted, although this is not an essential condition.

The first splicing plate 30 has a U-shaped cross-section with two opposite parallel first flat end sections 31 connected together by a first connecting plate section 32, and the second splicing plate 40 has a similar U-shaped cross-section with two opposite parallel second flat end sections 41 connected together by a second connecting plate section 42. The first and second connecting plate sections 32, 42 are, in the shown embodiment, convex vaulted and conjugated with the first and second connecting wall sections 15, 25 of the first and second end portions 11, 21 of the first and second tubular shaft stretches 10, 20, although this is not an essential condition.

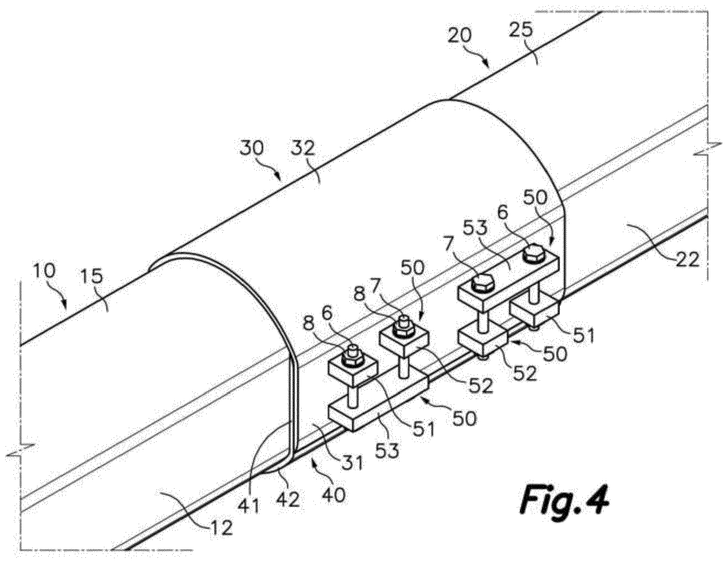

As shown in Figs. 4 to 7 , in an assembled position the first and second splicing plates 30, 40 are arranged with their respective first and second connecting plate sections 32, 42 superimposed to the first and second connecting wall sections 15, 25 of the first and second end portions 11, 21 of the first and second tubular shaft stretches 10, 20 at opposite sides thereof and with the respective opposite parallel first and second flat end sections 31, 41 overlapping one another and further overlapping the opposite parallel first and second flat wall sections 12, 22 of the first and second end portions 11, 21 of the first and second tubular shaft stretches 10, 20.

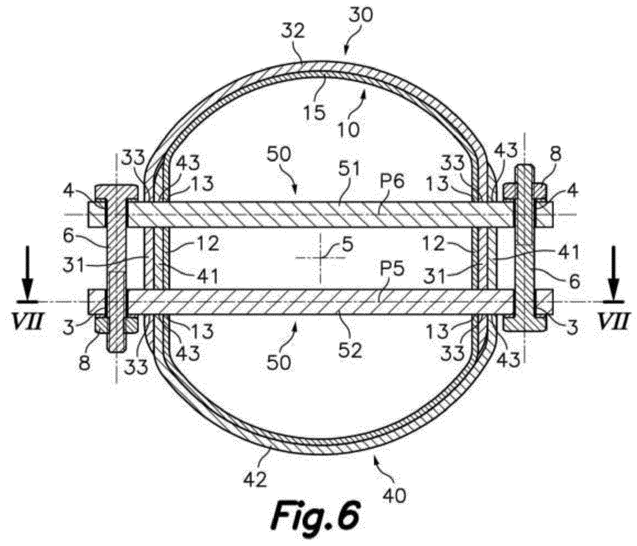

More in particular, as better shown in Fig. 6 , in the assembled position, one of the opposite parallel first and second flat end sections 31 of the first splicing plate 30 is arranged between one of the first and second flat wall sections 12, 22 of the first and second end portions 11, 21 of the first and second tubular shaft stretches 10, 20 and one of the opposite parallel first and second flat end sections 41 of the second splicing plate 40, while the other one of the opposite parallel first and second flat end sections 41 of the second splicing plate 40 is arranged between the other one of the first and second flat wall sections 12, 22 of the first and second end portions 11, 21 of the first and second tubular shaft stretches 10, 20 and the other one of the opposite parallel first and second flat end sections 31 of the first splicing plate 30.

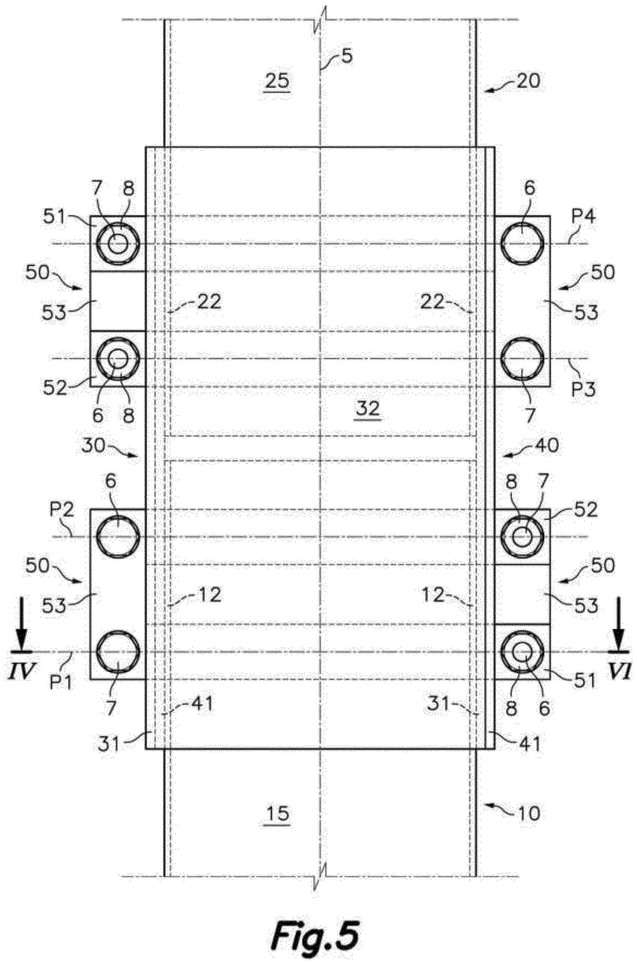

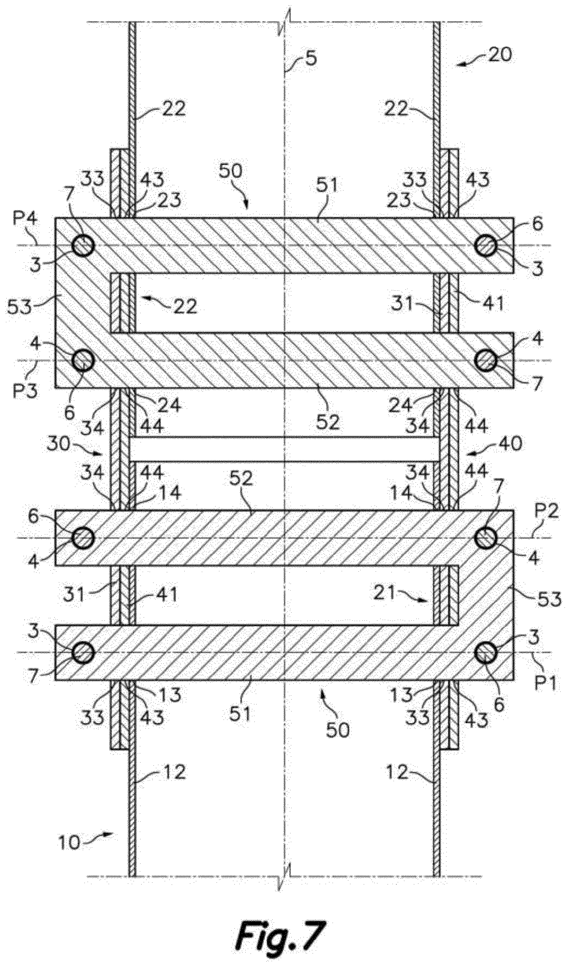

In each one of the first flat wall sections 12 of the first end portion 11 of the first tubular shaft stretch 10 first and second pairs of shaft locking holes 13, 14 are formed, and in each one of the second flat wall sections 22 of the second end portion 21 of the second tubular shaft stretch 20 first and second pairs of shaft locking holes 23, 24 are formed. The first pairs of shaft locking holes 13 of the first end portion 11 of the first tubular shaft stretch 10 are centred in a first plane P1 perpendicular to the longitudinal axis 5 (see Figs. 5 and 7 ), the second pairs of shaft locking holes 14 of the first end portion 11 of the first tubular shaft stretch 10 are centred in a second plane P2 perpendicular to the longitudinal axis 5, the first pairs of shaft locking holes 23 of the second end portion 21 of the second tubular shaft stretch 20 are centred in a third plane P3 perpendicular to the longitudinal axis 5, and the second pairs of shaft locking holes 24 of the second end portion 21 of the second tubular shaft stretch 20 are centred in a fourth plane P4 perpendicular to the longitudinal axis 5.

Each one of the first and second pairs of shaft locking holes 13, 23; 14, 24 has a first hole and a second hole. The first holes of the first pairs of shaft locking holes 13, 23 and the first holes of the second pairs of shaft locking holes 14, 24 are all centred in a fifth plane P5 (see Fig. 6) parallel to the longitudinal axis 5 and perpendicular to the first, second, third and fourth planes P1, P2, P3, P4, and the second holes of the first pairs of shaft locking holes 13, 23 and the second holes of the second pairs of shaft locking holes 14, 24 are all centred in a sixth plane P6 parallel to the fifth plane P5.

Each one of the first and second flat end sections 31, 41 of the first and second splicing plates 30, 40 has opposite first and second axial end portions respectively overlapping the opposite parallel first flat wall sections 12, 21 of the first and second end portions 11, 21 of the first and second tubular shaft stretches 10, 20. In each one of the opposite first and second axial end portions of the first and second splicing plates 30, 40 first and second pairs of plate locking holes 33, 34; 43, 44 are formed. In the assembled position, as shown in Figs. 4 to 7 , the first and second pairs of plate locking holes 33, 34; 43, 44 formed in the first axial end portions of the first and second flat end sections 31, 41 of the first and second splicing plates 30, 40 are in alignment with the first and second pairs of shaft locking holes 13, 14 formed in the first end portion 11 of the first tubular shaft stretch 10, and the first and second pairs of plate locking holes 33, 34; 43, 44 formed in the second axial end portions of the first and second flat end sections 31, 41 of the first and second splicing plates 30, 40 are in alignment with the first and second pairs of shaft locking holes 23, 24 formed in the second end portion 21 of the second tubular shaft stretch 20.

The splicing device further comprises two pairs of first passing-through locking members 51 and two pairs of second passing-through locking members 52. In the assembled position, one of the pairs of first passing-through locking members 51 are inserted in one of the first pairs of plate locking holes 33, 43 formed in the in the first axial end portions of first and second splicing plates 30, 40 and in the aligned first pairs of shaft locking holes 13 formed in the first end portion 11 of the first tubular shaft stretch 10, and the other pair of first passing-through locking members 51 are inserted in another of the first pairs of plate locking holes 33, 43 formed in the in the second axial end portions of first and second splicing plates 30, 40 and in the aligned first pairs of shaft locking holes 23 formed in the second end portion 21 of the second tubular shaft stretch 20.

As well, one of the pairs of second passing-through locking members 52 are inserted in one of the second pairs of plate locking holes 34, 44 formed in the in the first axial end portions of first and second splicing plates 30, 40 and in the aligned second pairs of shaft locking holes 14 formed in the first end portion 11 of the first tubular shaft stretch 10, and the other pair of second passing-through locking members 52 are inserted in another of the second pairs of plate locking holes 43, 44 formed in in the second axial end portions of the first and second splicing plates 30, 40 and in the aligned second pairs of shaft locking holes 24 formed in the second end portion 21 of the second tubular shaft stretch 20.

Each first passing-through locking member 51 of one of the pairs of first passing-through locking members 51 and an adjacent second passing-through locking member 52 of one of the pairs of second passing-through locking members 52 are rigidly connected together by a transverse connecting member 53 constituting one of the four aforementioned U-shaped locking elements 50.

The shaft locking holes 13, 14; 23, 24 formed in the first and second end portions 11, 21 of the first and second tubular shaft stretches 10, 20 as well as the plate locking holes 33, 34; 43, 44 formed in the first and second splicing plates 30, 40 have a rectangular or trapezium shape, with two sides of the rectangular or trapezium shape being parallel to the longitudinal axis 5. The first and second passing-through locking members 51, 52 have a rectangular or trapezium cross-section conjugated with the rectangular or trapezium shape of the shaft and plate locking holes 13, 14; 23, 24; 33, 34; 43, 44.

The first and second passing-through locking members 51, 52 are longer than the overall width of the first and second splicing plates 30, 40 in the assembled position, so that the first and second passing-through locking members 51, 52 have protruding end portions protruding from outer surfaces of the first and second splicing plates 30, 40. The transverse connecting member 53 is connected to one of the protruding end portions of the first and second passing-through locking members 51, 52.

First connection holes 3 perpendicular to the longitudinal axis 5 are formed in the protruding end portions of the first passing-through locking members 51, and second connection holes 4 perpendicular to the longitudinal axis 5 are formed in the protruding end portions of the second passing-through locking members 52. First fastening screws 6 are installed through the aligned first and second connection holes 3, 4 of first pairs of adjacent first and second passing-through locking members 51, 52, and second fastening screws 7 are installed through the aligned first and second connecting holes 3, 4 of second pairs of adjacent first and second passing-through locking members 51, 52. The first and second fastening screws 6, 7 are tightened by fastening nuts 8.

In the shown first and second embodiments, the first and second passing-through locking members 51, 52 of the locking elements 50 are inserted into the locking holes in opposite directions and from opposite sides of the tubular shaft but they could be alternatively all inserted in a same direction and from a same side of the tubular shaft with an equivalent result.

In an alternative embodiment (not shown), the first and second passing-through locking members 51, 52 are independent from one another. In another alternative embodiment (not shown), there are only first pairs of passing-through locking members 51 in cooperation with first pairs of shaft and plate locking holes 13, 23, 33, 43.

Other embodiments could be obtained by combination of the embodiments described above without departing from the scope of the present invention as defined in the attached claims.

## Claims

1. A tubular shaft splicing device capable of transmitting torque, comprising:
- adjacent first and second end portions (11, 21) of contiguous first and second tubular shaft stretches (10, 20) of a tubular shaft having a longitudinal axis (5);
- at least one splicing plate (30, 40) superimposed to the adjacent first and second end portions (11, 21); and
- passing-through locking members (51, 52) inserted in aligned locking holes (13, 14; 23, 24; 33, 34; 43, 44) formed in the first and second end portions (11, 21) and in the at least one splicing plate (30, 40), the passing-through locking members (51, 52) comprising a rectangular or trapezium cross-section;
and the locking holes (13, 14; 23, 24; 33, 34; 43, 44) formed in the first and second end portions (11, 21) and in the at least one splicing plate (30, 40) have a conjugated rectangular or trapezium shape, wherein two sides of the rectangular or trapezium shape are parallel to the longitudinal axis (5);
**characterized in that** the locking holes (13, 14; 23, 24; 33, 34; 43, 44) comprise several pairs of shaft locking holes (13, 14; 23, 24) formed in opposite wall sections of each one of the first and second end portions (11, 21), and several pairs of plate locking holes (33, 34; 43, 44) formed in opposite wall sections of the at least one splicing plate (30, 40),
wherein the pairs of plate locking holes (33, 34; 43, 44) are in alignment with the pairs of shaft locking holes (13, 14; 23, 24),
wherein the pairs of shaft locking holes (13, 14; 23, 24) and the corresponding pairs of plate locking holes (33, 34; 43, 44) are centred in respective planes perpendicular to the longitudinal axis (5);
the passing-through locking members (51, 52) comprise pairs of first and second passing-through locking members (51, 52) inserted in the pairs of plate locking holes (33, 34; 43, 44) and in the aligned pairs of shaft locking holes (13, 14; 23, 24);
the first and second passing-through locking members (51, 52) have protruding end portions protruding from opposite outer surfaces of the at least one splicing plate (30, 40),
wherein connection pairs of opposite connection holes (3, 4) perpendicular to the longitudinal axis (5) are formed in the protruding end portions of the first and second passing-through locking members (51, 52), and
corresponding fastening screws (6, 7) are installed through the pairs of opposite connection holes (3, 4) and tightened by fastening nuts (8).

2. The tubular shaft splicing device according to claim 1, wherein each first passing-through locking member (51) of the pair of first passing-through locking members (51) and the adjacent second passing-through locking member (52) of the pair of second passing-through locking members (52) are rigidly connected together at one of their protruding end portions by a transverse connecting member (53) constituting U-shaped locking elements (50).

3. The tubular shaft splicing device according to claim 2, wherein the connection holes (3, 4) of each locking element (50) are located on the transverse connecting members (53) and on free ends of the locking members (51, 52), opposite to the ends of the locking members (51, 52) bearing the transverse connecting members (53); and
wherein for each pair of corresponding U-shaped locking elements (50), the connection holes (3, 4) in the transverse connecting member (53) of one of the locking elements (50) are connected by the screws (6, 7) to the holes (3, 4) on free ends of the locking members (51, 52) of the other one of the locking elements (50).

4. The tubular shaft splicing device according to any one of claims 1 to 3, wherein the first and second end portions (11, 21) of the first and second tubular shaft stretches (10, 20) have a circular cross-section, and the at least one splicing plate (30, 40) is a single splicing plate (30) having a circular cross-section with an inner diameter conjugated to an outer diameter of the first and second end portions (11, 21) of the first and second tubular shaft stretches (10, 20).

5. The tubular shaft splicing device according to any one of claims 1 to 3, wherein the at least one splicing plate (30, 40) comprises opposite first and second splicing plates (30, 40) which are superimposed to opposite sides of the adjacent first and second end portions (11, 21) of the first and second tubular shaft stretches (10, 20), and wherein the first and second end portions (11, 21) of the first and second tubular shaft stretches (10, 20) have opposite parallel first and second flat wall sections (12, 22) and the first and second splicing plates (30, 40) have respective opposite parallel first and second flat end sections (31, 41) overlapping the opposite parallel first and second flat wall sections (12, 22) of the first and second end portions (11, 21) of the first and second tubular shaft stretches (10, 20).

6. The tubular shaft splicing device according to claim 5, wherein the pairs of shaft locking holes (13, 14; 23, 24) are formed in the opposite parallel first and second flat wall sections (12, 22) of the first and second end portions (11, 21) of the first and second tubular shaft stretches (10, 20) and the pairs of plate locking holes (33, 34; 43, 44) are formed in the opposite parallel first and second flat end sections (31, 41) of the first and second splicing plates (30, 40).

7. The tubular shaft splicing device according to claim 5 or 6, wherein one of the opposite parallel first and second flat end sections (31) of the first splicing plate (30) is arranged between one of the first and second flat wall sections (12, 22) of the first and second end portions (11, 21) of the first and second tubular shaft stretches (10, 20) and one of the opposite parallel first and second flat end sections (41) of the second splicing plate (40), and the other one of the opposite parallel first and second flat end sections (41) of the second splicing plate (40) is arranged between the other one of the first and second flat wall sections (12, 22) of the first and second end portions (11, 21) of the first and second tubular shaft stretches (10, 20) and the other one of the opposite parallel first and second flat end sections (31) of the first splicing plate (30).

8. The tubular shaft splicing device according to claim 5, 6 or 7, wherein the first opposite flat wall sections (12) of the first end portion (11) of the first tubular shaft stretch (10) are connected together by opposite first connecting wall sections (15) and the second opposite flat wall sections (22) of the second end portion (21) of the second tubular shaft stretch (20) are connected together by opposite second connecting wall sections (25), and wherein the opposite parallel first and second flat end sections (31) of the first splicing plate (30) are connected together by a first connecting plate section (32) which is arranged on one of the opposite first connecting wall sections (15) of the first end portion (11) of the first tubular shaft stretch (10) and on one of the opposite second connecting wall sections (25) of the second end portion (21) of the second tubular shaft stretch (20), and the opposite parallel first and second flat end sections (41) of the second splicing plate (40) are connected together by a second connecting plate section (42) which is arranged on the other one of the opposite first connecting wall sections (15) of the first end portion (11) of the first tubular shaft stretch (10) and on the other one of the opposite second connecting wall sections (25) of the second end portion (21) of the second tubular shaft stretch (20).

9. The tubular shaft splicing device according to claim 8, wherein the opposite first connecting wall sections (15) of the first end portion (11) of the first tubular shaft stretch (10), the opposite second connecting wall sections (25) of the second end portion (21) of the second tubular shaft stretch (20), the first connecting plate section (32) of the first splicing plate (30), and the second connecting plate section (42) of the second splicing plate (40) are convex vaulted.

## Patentansprüche

1. Rohrwellenspleissvorrichtung mit Fähigkeit zur Drehmomentübertragung, Folgendes umfassend:
- benachbarte erste und zweite Endabschnitte (11, 21) von aneinandergrenzenden ersten und zweiten Rohrwellenstrecken (10, 20) einer Rohrwelle, die eine Längsachse (5) aufweist;
- mindestens eine Spleissplatte (30, 40), die auf den benachbarten ersten und zweiten Endabschnitten (11, 21) aufliegt; und
- durchgehende Verriegelungsglieder (51, 52), die in ausgerichtete Verriegelungslöcher (13, 14; 23, 24; 33, 34; 43, 44) eingeführt sind, die in dem ersten und zweiten Endabschnitt (11, 21) und in der mindestens einen Spleissplatte (30, 40) gebildet sind, wobei die durchgehenden Verriegelungsglieder (51, 52) einen rechteckigen oder trapezförmigen Querschnitt umfassen;
und wobei die Verriegelungslöcher (13, 14; 23, 24; 33, 34; 43, 44), die in den ersten und zweiten Abschnitten (11, 21) und in der mindestens einen Spleissplatte (30, 40) gebildet sind, eine konjugierte rechteckige oder trapezförmige Form aufweisen, wobei zwei Seiten der rechteckigen oder trapezförmigen Form parallel zu der Längsachse (5) sind;
**dadurch gekennzeichnet, dass** die Verriegelungslöcher (13, 14; 23, 24; 33, 34; 43, 44) mehrere Paare von Wellenverriegelungslöchern (13, 14; 23, 24) umfassen, die in gegenüberliegenden Wandabschnitten jedes der ersten und zweiten Endabschnitte (11, 21) gebildet sind, und mehrere Paare von Plattenverriegelungslöchern (33, 34; 43, 44), die in gegenüberliegenden Wandabschnitten der mindestens einen Spleissplatte (30, 40) gebildet sind, wobei die Paare von Plattenverriegelungslöchern (33, 34; 43, 44) mit den Paaren von Wellenverriegelungslöchern (13, 14; 23, 24) ausgerichtet sind,
wobei die Paare von Wellenverriegelungslöchern (13, 14; 23, 24) und die entsprechenden Paare von Plattenverriegelungslöchern (33, 34; 43, 44) in jeweiligen senkrecht zur Längsachse (5) verlaufenden Ebenen zentriert sind; wobei die durchgehenden Verriegelungsglieder (51, 52) Paare von ersten und zweiten durchgehenden Verriegelungsgliedern (51, 52) umfassen, die in die Paare von Plattenverriegelungslöchern (33, 34; 43, 44) und in die ausgerichteten Paare von Wellenverriegelungslöchern (13, 14; 23, 24) eingeführt sind;
die ersten und zweiten durchgehenden Verriegelungsglieder (51, 52) vorstehende Endabschnitte aufweisen, die von gegenüberliegenden Außenflächen der mindestens einen Spleissplatte (30, 40) vorstehen, wobei Verbindungspaare von gegenüberliegenden Verbindungslöchern (3, 4) senkrecht zur Längsachse (5) in den vorstehenden Endabschnitten der ersten und zweiten durchgehenden Verriegelungsglieder (51, 52) gebildet werden, und
entsprechende Befestigungsschrauben (6, 7) durch die Paare von gegenüberliegenden Verbindungslöchern (3, 4) eingebaut und mit Befestigungsmuttern (8) angezogen werden.

2. Rohrwellenspleissvorrichtung nach Anspruch 1, wobei jedes erste durchgehende Verriegelungsglied (51) des Paares von ersten durchgehenden Verriegelungsgliedern (51) und das benachbarte zweite durchgehende Verriegelungsglied (52) des Paares von zweiten durchgehenden Verriegelungsgliedern (52) an einem ihrer vorstehenden Endabschnitte durch ein Querverbindungsglied (53) starr miteinander verbunden sind, das U-förmige Verriegelungselemente (50) ausmacht.

3. Rohrwellenspleissvorrichtung nach Anspruch 2, wobei sich die Verbindungslöcher (3, 4) jedes Verriegelungselements (50) an den Querverbindungsgliedern (53) und an freien Enden der Verriegelungsglieder (51, 52) befinden, die den Enden der Verriegelungsglieder (51, 52), die die Querverbindungsglieder (53) tragen, gegenüberliegen; und
wobei für jedes Paar entsprechender U-förmiger Verriegelungselemente (50) die Verbindungslöcher (3, 4) in dem Querverbindungsglied (53) eines der Verriegelungselemente (50) durch die Schrauben (6, 7) mit den Löchern (3, 4) an freien Enden der Verriegelungsglieder (51, 52) des anderen der Verriegelungselemente (50) verbunden sind.

4. Rohrwellenspleissvorrichtung nach einem der Ansprüche 1 bis 3, wobei der erste und der zweite Endabschnitt (11, 21) der ersten und der zweiten Rohrwellenstrecke (10, 20) einen kreisförmigen Querschnitt aufweisen und die mindestens eine Spleissplatte (30, 40) eine einzelne Spleissplatte (30) ist, die einen kreisförmigen Querschnitt mit einem Innendurchmesser aufweist, der mit einem Außendurchmesser des ersten und des zweiten Endabschnitts (11, 21) der ersten und der zweiten Rohrwellenstrecke (10, 20) konjugiert ist.

5. Rohrwellenspleissvorrichtung nach einem der Ansprüche 1 bis 3, wobei die mindestens eine Spleissplatte (30, 40) gegenüberliegende erste und zweite Spleissplatten (30, 40) umfasst, die auf gegenüberliegenden Seiten der benachbarten ersten und zweiten Endabschnitte (11, 21) der ersten und zweiten Rohrwellenstrecke (10, 20) aufliegen, und wobei die ersten und zweiten Endabschnitte (11, 21) der ersten und zweiten Rohrwellenstrecke (10, 20) gegenüberliegende parallele erste und zweite flache Wandabschnitte (12, 22) aufweisen und die erste und zweite Spleissplatte (30, 40) jeweils gegenüberliegende parallele erste und zweite flache Endabschnitte (31, 41) aufweisen, die die gegenüberliegenden parallelen ersten und zweiten flachen Wandabschnitte (12, 22) des ersten und zweiten Endabschnitts (11, 21) der ersten und zweiten Rohrwellenstrecke (10, 20) überlappen.

6. Rohrwellenspleissvorrichtung nach Anspruch 5, wobei die Paare von Wellenverriegelungslöchern (13, 14; 23, 24) in den gegenüberliegenden parallelen ersten und zweiten flachen Wandabschnitten (12, 22) des ersten und zweiten Endabschnitts (11, 21) der ersten und zweiten Rohrwellenstrecke (10, 20) gebildet sind und die Paare von Plattenverriegelungslöchern (33, 34; 43, 44) in den gegenüberliegenden parallelen ersten und zweiten flachen Endabschnitten (31, 41) der ersten und zweiten Spleissplatte (30, 40) gebildet sind.

7. Rohrwellenspleissvorrichtung nach Anspruch 5 oder 6, wobei einer der gegenüberliegenden parallelen ersten und zweiten flachen Endabschnitte (31) der ersten Spleissplatte (30) zwischen einem der ersten und zweiten flachen Wandabschnitte (12, 22) des ersten und zweiten Endabschnitts (11, 21) der ersten und zweiten Rohrwellenstrecke (10, 20) und einem der gegenüberliegenden parallelen ersten und zweiten flachen Endabschnitte (41) der zweiten Spleissplatte (40) angeordnet ist, und der andere der gegenüberliegenden parallelen ersten und zweiten flachen Endabschnitte (41) der zweiten Spleissplatte (40) zwischen dem anderen der ersten und zweiten flachen Wandabschnitte (12, 22) des ersten und zweiten Endabschnitts (11, 21) der ersten und zweiten Rohrwellenstrecke (10, 20) und dem anderen der gegenüberliegenden parallelen ersten und zweiten flachen Endabschnitte (31) der ersten Spleissplatte (30) angeordnet ist.

8. Rohrwellenspleissvorrichtung nach Anspruch 5, 6 oder 7, wobei die ersten gegenüberliegenden flachen Wandabschnitte (12) des ersten Endabschnitts (11) der ersten Rohrwellenstrecke (10) durch gegenüberliegende erste Verbindungswandabschnitte (15) und die zweiten gegenüberliegenden flachen Wandabschnitte (22) des zweiten Endabschnitts (21) der zweiten Rohrwellenstrecke (20) durch gegenüberliegende zweite Verbindungswandabschnitte (25) miteinander verbunden sind, und wobei die gegenüberliegenden parallelen ersten und zweiten flachen Endabschnitte (31) der ersten Spleissplatte (30) durch einen ersten Verbindungsplattenabschnitt (32) miteinander verbunden sind, der an einem der gegenüberliegenden ersten Verbindungswandabschnitte (15) des ersten Endabschnitts (11) der ersten Rohrwellenstrecke (10) und an einem der gegenüberliegenden zweiten Verbindungswandabschnitte (25) des zweiten Endabschnitts (21) der zweiten Rohrwellenstrecke (20) angeordnet ist, und die gegenüberliegenden parallelen ersten und zweiten flachen Endabschnitte (41) der zweiten Spleissplatte (40) durch einen zweiten Verbindungsplattenabschnitt (42) miteinander verbunden sind, der an dem anderen der gegenüberliegenden ersten Verbindungswandabschnitte (15) des ersten Endabschnitts (11) der ersten Rohrwellenstrecke (10) und an dem anderen der gegenüberliegenden zweiten Verbindungswandabschnitte (25) des zweiten Endabschnitts (21) der zweiten Rohrwellenstrecke (20) angeordnet ist.

9. Rohrwellenspleissvorrichtung nach Anspruch 8, wobei die gegenüberliegenden ersten Verbindungswandabschnitte (15) des ersten Endabschnitts (11) der ersten Rohrwellenstrecke (10), die gegenüberliegenden zweiten Verbindungswandabschnitte (25) des zweiten Endabschnitts (21) der zweiten Rohrwellenstrecke (20), der erste Verbindungsplattenabschnitt (32) der ersten Spleissplatte (30) und der zweite Verbindungsplattenabschnitt (42) der zweiten Spleissplatte (40) konvex gewölbt sind.

## Revendications

1. Dispositif de jonction d'arbre tubulaire capable de transmettre un couple, comprenant :
- des première et secondes parties d'extrémité adjacentes (11, 21) de premier et second tronçons d'arbre tubulaire contigus (10, 20) d'un arbre tubulaire ayant un axe longitudinal (5) ;
- au moins une plaque de jonction (30, 40) superposée aux première et seconde parties d'extrémité adjacentes (11, 21) ; et
- des éléments de verrouillage traversants (51, 52) insérés dans des orifices de verrouillage alignés (13, 14 ; 23, 24 ; 33, 34 ; 43, 44) formés dans les première et seconde parties d'extrémité (11, 21) et dans l'au moins une plaque de jonction (30, 40), les éléments de verrouillage traversants (51, 52) comprenant une section transversale rectangulaire ou en trapèze ; et les orifices de verrouillage (13, 14 ; 23, 24 ; 33, 34 ; 43, 44) formés dans les première et seconde parties d'extrémité (11, 21) et dans l'au moins une plaque de jonction (30, 40) ont un profilé rectangulaire ou en trapèze conjugué,
dans lequel deux côtés du profilé rectangulaire ou en trapèze sont parallèles à l'axe longitudinal (5) ;
**caractérisé en ce que** les orifices de verrouillage (13, 14 ; 23, 24 ; 33, 34 ; 43, 44) comprennent plusieurs paires d'orifices de verrouillage d'arbre (13, 14 ; 23, 24) formés dans des sections de paroi opposées de chacune des première et seconde parties d'extrémité (11, 21), et plusieurs paires d'orifices de verrouillage de plaque (33, 34 ; 43, 44) formés dans des sections de paroi opposées de l'au moins une plaque de jonction (30, 40),
dans lequel les paires d'orifices de verrouillage de plaque (33, 34 ; 43, 44) sont en alignement avec les paires d'orifices de verrouillage d'arbre (13, 14 ; 23, 24), dans lequel les paires d'orifices de verrouillage d'arbre (13, 14 ; 23, 24) et les paires correspondantes d'orifices de verrouillage de plaque (33, 34 ; 43, 44) sont centrées dans des plans respectifs perpendiculaires à l'axe longitudinal (5) ;
les éléments de verrouillage traversants (51, 52) comprennent des paires de premier et second éléments de verrouillage traversants (51, 52) insérés dans les paires d'orifices de verrouillage de plaque (33, 34 ; 43, 44) et dans les paires alignées d'orifices de verrouillage d'arbre (13, 14 ; 23, 24) ;
les premier et second éléments de verrouillage traversants (51, 52) ont des parties d'extrémité saillantes faisant saillie depuis des surfaces externes opposées de l'au moins une plaque de jonction (30, 40), dans lequel des paires de liaisons d'orifices de liaison opposés (3, 4) perpendiculaires à l'axe longitudinal (5) sont formées dans les parties d'extrémité saillantes des premier et second éléments de verrouillage traversants (51, 52), et
des vis de fixation correspondantes (6, 7) sont installées à travers les paires d'orifices de liaison opposés (3, 4) et serrées par des écrous de fixation (8).

2. Dispositif de jonction d'arbre tubulaire selon la revendication 1, dans lequel chaque premier élément de verrouillage traversant (51) de la paire de premiers éléments de verrouillage traversants (51) et le second élément de verrouillage traversant adjacent (52) de la paire de seconds éléments de verrouillage traversants (52) sont reliés ensemble de manière rigide au niveau de l'une de leurs parties d'extrémité saillantes par un élément de liaison transversal (53) constituant des éléments de verrouillage à profilé en U (50).

3. Dispositif de jonction d'arbre tubulaire selon la revendication 2, dans lequel les orifices de liaison (3, 4) de chaque élément de verrouillage (50) sont situés sur les éléments de liaison transversaux (53) et sur des extrémités libres des éléments de verrouillage (51, 52), à l'opposé des extrémités des éléments de verrouillage (51, 52) portant les éléments de liaison transversaux (53) ; et dans lequel pour chaque paire d'éléments de verrouillage à profilé en U correspondants (50), les orifices de liaison (3, 4) dans l'élément de liaison transversal (53) de l'un des éléments de verrouillage (50) sont reliés par les vis (6, 7) aux orifices (3, 4) sur des extrémités libres des éléments de verrouillage (51, 52) de l'autre des éléments de verrouillage (50).

4. Dispositif de jonction d'arbre tubulaire selon l'une quelconque des revendications 1 à 3, dans lequel les première et seconde parties d'extrémité (11, 21) des premier et second tronçons d'arbre tubulaire (10, 20) ont une section transversale circulaire, et l'au moins une plaque de jonction (30, 40) est une plaque de jonction unique (30) ayant une section transversale circulaire avec un diamètre interne conjugué à un diamètre externe des première et seconde parties d'extrémité (11, 21) des premier et second tronçons d'arbre tubulaire (10, 20).

5. Dispositif de jonction d'arbre tubulaire selon l'une quelconque des revendications 1 à 3, dans lequel l'au moins une plaque de jonction (30, 40) comprend des première et seconde plaques de jonction opposées (30, 40) qui sont superposées à des côtés opposés des première et seconde parties d'extrémité adjacentes (11, 21) des premier et second tronçons d'arbre tubulaire (10, 20), et dans lequel les première et seconde parties d'extrémité (11, 21) des premier et second tronçons d'arbre tubulaire (10, 20) ont des première et seconde sections de paroi plates parallèles opposées (12, 22) et les première et seconde plaques de jonction (30, 40) ont des première et seconde sections d'extrémité plates parallèles opposées respectives (31, 41) chevauchant les première et seconde sections de paroi plates parallèles opposées (12, 22) des première et seconde parties d'extrémité (11, 21) des premier et second tronçons d'arbre tubulaire (10, 20).

6. Dispositif de jonction d'arbre tubulaire selon la revendication 5, dans lequel les paires d'orifices de verrouillage d'arbre (13, 14 ; 23, 24) sont formées dans les première et seconde sections de paroi plates parallèles opposées (12, 22) des première et seconde parties d'extrémité (11, 21) des premier et second tronçons d'arbre tubulaire (10, 20) et les paires d'orifices de verrouillage de plaque (33, 34 ; 43, 44) sont formées dans les première et seconde sections d'extrémité plates parallèles opposées (31, 41) des première et seconde plaques de jonction (30, 40).

7. Dispositif de jonction d'arbre tubulaire selon la revendication 5 ou 6, dans lequel l'une des première et seconde sections d'extrémité plates parallèles opposées (31) de la première plaque de jonction (30) est agencée entre l'une des première et seconde sections de paroi plates (12, 22) des première et seconde parties d'extrémité (11, 21) des premier et second tronçons d'arbre tubulaire (10, 20) et l'une des première et seconde sections d'extrémité plates parallèles opposées (41) de la seconde plaque de jonction (40), et l'autre des première et seconde sections d'extrémité plates parallèles opposées (41) de la seconde plaque de jonction (40) est agencée entre l'autre des première et seconde sections de paroi plates (12, 22) des première et seconde parties d'extrémité (11, 21) des premier et second tronçons d'arbre tubulaire (10, 20) et l'autre des première et seconde sections d'extrémité plates parallèles opposées (31) de la première plaque de jonction (30).

8. Dispositif de jonction d'arbre tubulaire selon la revendication 5, 6 ou 7, dans lequel les premières sections de paroi plates opposées (12) de la première partie d'extrémité (11) du premier tronçon d'arbre tubulaire (10) sont reliées ensemble par des premières sections de paroi de liaison opposées (15) et les secondes sections de paroi plates opposées (22) de la seconde partie d'extrémité (21) du second tronçon d'arbre tubulaire (20) sont reliées ensemble par des secondes sections de paroi de liaison opposées (25), et dans lequel les première et seconde sections d'extrémité plates parallèles opposées (31) de la première plaque de jonction (30) sont reliées ensemble par une première section de plaque de liaison (32) qui est agencée sur l'une des premières sections de paroi de liaison opposées (15) de la première partie d'extrémité (11) du premier tronçon d'arbre tubulaire (10) et sur l'une des secondes sections de paroi de liaison opposées (25) de la seconde partie d'extrémité (21) du second tronçon d'arbre tubulaire (20), et les première et seconde sections d'extrémité plates parallèles opposées (41) de la seconde plaque de jonction (40) sont reliées ensemble par une seconde section de plaque de liaison (42) qui est agencée sur l'autre des premières sections de paroi de liaison opposées (15) de la première partie d'extrémité (11) du premier tronçon d'arbre tubulaire (10) et sur l'autre des secondes sections de paroi de liaison opposées (25) de la seconde partie d'extrémité (21) du second tronçon d'arbre tubulaire (20).

9. Dispositif de jonction d'arbre tubulaire selon la revendication 8, dans lequel les premières sections de paroi de liaison opposées (15) de la première partie d'extrémité (11) du premier tronçon d'arbre tubulaire (10), les secondes sections de paroi de liaison opposées (25) de la seconde partie d'extrémité (21) du second tronçon d'arbre tubulaire (20), la première section de plaque de liaison (32) de la première plaque de jonction (30), et la seconde section de plaque de liaison (42) de la seconde plaque de jonction (40) sont voûtées convexes.
